# FASCICULE DE BREVET EUROPEEN

(11) **EP 2 934 960 B1**
(45) Date de publication et mention de la délivrance du brevet: **15.03.2017**
(21) Numéro de dépôt: 13785568.0
(22) Date de dépôt: 15.10.2013
(51) Int. Cl.: B60T 1/00, B60T 17/22

(54) **PROCEDE D'ALERTE DU NON ENGAGEMENT DU FREIN DE PARKING D'UNE TRANSMISSION AUTOMATIQUE OU AUTOMATISEE DE VEHICULE AVANT L'ABANDON DU VEHICULE PAR LE CONDUCTEUR**
WARNVERFAHREN DES FAHRERS EINES FAHEZEUGES MIT AUTOMATIKGETRIEBE, BEIM VERLASSEN DES FAHRZEUGES OHNE DIE FESTSTELLBREMSE AKTIVIERT ZU HABEN
METHOD FOR WARNING DRIVER WHEN LEAVING VEHICLE WITH AUTOMATIC DRIVETRAIN PARKING BRAKE FOR NON ENGAGEMENT OF PARKING BRAKE

(30) Priorité: 18.12.2012 FR 1262197
(43) Date de publication de la demande: 28.10.2015
(73) Titulaire: Renault S.A.S., 92100 Boulogne-Billancourt (FR)
(72) Inventeur: DELANNOYE, Olivier, 92290 Chatenay-Malabry (FR)
(86) Numéro de dépôt international: PCT/FR2013/052463
(87) Numéro de publication internationale: WO 2014/096578

(56) Documents cités:
- EP-A2- 0 976 628
- AU-B2- 758 998
- AU-B2- 2003 200 668
- US-A1- 2002 189 882
- US-B1- 6 406 102

## Description

La présente invention concerne une stratégie d'alerte, dite « alerte porte ouverte », sur des véhicules équipés de transmissions automatiques dotées d'une fonction de doigt de parking électrique.

Plus précisément, elle a pour objet un procédé d'alerte du non enclenchement d'un frein de parking associé à une transmission automatique ou automatisée de véhicule automobile, après la coupure du moteur.

Cette invention trouve une application privilégiée, mais non exclusive, sur des véhicules équipés de transmissions automatiques munies d'un doigt de parking électrique.

Afin d'éviter tout risque sécuritaire dû à une non-immobilisation d'un véhicule à transmission automatique, ou automatisée, il est important d'alerter le conducteur que la transmission n'est pas en mode « Park », avant que celui-ci ne quitte le véhicule.

La publication US 6 406 102, décrit un système et un procédé de freinage de parking sans enregistrement du dernier signal de parking.

Selon une disposition connue, l'alerte est donnée en détectant l'ouverture de la porte du conducteur, et en affichant un message au tableau de bord. Par la publication US 5 956 088, on connaît une méthode de ce type, associant la surveillance de la position du levier de sélection d'une transmission automatique et l'activation d'un signal d'alerte.

Le problème de sécurité lié à la non-immobilisation du véhicule, n'est cependant pas résolu par cette publication dans toutes les circonstances. En particulier, si le calculateur de transmission automatique qui surveille l'enclenchement du frein de parking est inactif lorsque le véhicule est abandonné, aucun contrôle n'est plus assuré sur l'enclenchement du frein de parking.

La présente invention vise à assurer 1' « alerte porte ouverte » du véhicule après la coupure du moteur.

Dans ce but, elle propose qu'une unité de calcul du véhicule autre que le calculateur de la transmission, enregistre le dernier signal relatif à l'état d'enclenchement du frein de parking, et déclenche un signal d'alerte à l'attention des passagers du véhicule, si la portière du conducteur ou du passager est ouverte alors que dispositif de parking de la transmission automatique ou automatisée n'est pas enclenché.

Selon l'invention, la mémorisation du signal d'état d'enclenchement est assurée par un calculateur du véhicule restant actif après la coupure du calculateur de la transmission.

De préférence, le message d'alerte est émis par un calculateur associé aux commandes de bord du véhicule.

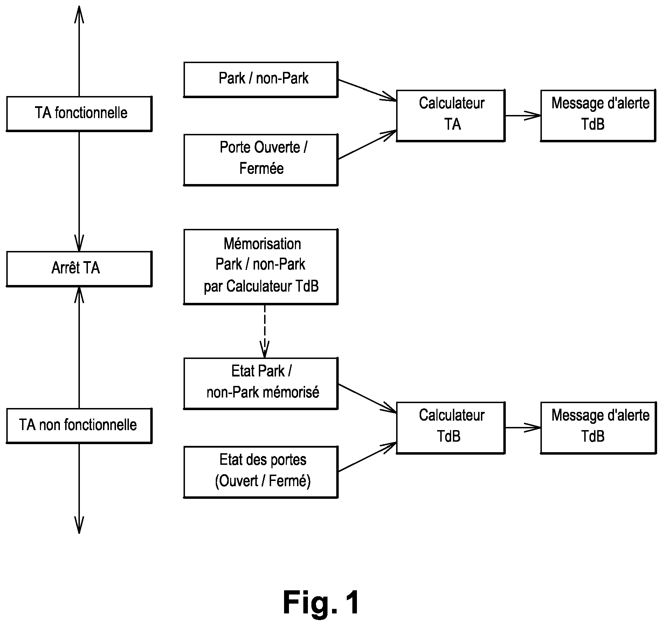

D'autres caractéristiques et avantages de la présente invention apparaîtront clairement à la lecture de la description suivante d'un mode de réalisation non limitatif de celle-ci, en se reportant aux dessins annexés, sur lesquels la figure unique illustre la stratégie.

Le tableau de bord d'un véhicule possède le plus souvent son propre calculateur, associé aux différentes commandes de bord. La transmission automatique (TA) possède également le sien. En fonctionnement normal, c'est-à-dire lorsque la transmission automatique (TA) est fonctionnelle, « moteur tournant », son calculateur est informé en permanence de l'état d'enclenchement du frein de parking et/ou de la position du sélecteur de vitesses. Le calculateur de la TA peut transmettre au tableau de bord l'état de cette fonction particulière de la transmission sur le réseau de transmission de données du véhicule, par exemple son réseau ou bus « CAN » (Controller Area Network). Le calculateur du tableau de bord a alors la possibilité de réagir en « esclave » « sur ordre » du calculateur de la TA, dans une fonction d'alerte, pour prévenir les occupants du véhicule de l'état d'enclenchement, ou non, du frein de parking. L'alerte « porte ouverte » peut donc être délivrée en temps utile par un message d'alerte du tableau de bord.

Différents calculateurs peuvent en principe assurer la détection de l'ouverture de la portière du conducteur. Toutefois, pour des raisons de cohérence, de transversalité et d'affectation des fonctions aux différentes pièces du système, c'est souvent le calculateur de transmission automatique qui gère lui-même cette alerte, comme indiqué sur la partie supérieure de la figure. En toutes circonstances, la fonction « alerte porte ouverte » implique la surveillance des contacts de porte et le traitement de l'information « porte ouverte ». En fonctionnement normal du véhicule, la gestion de l'alerte implique donc le calculateur de la TA. L'alerte est générée si les deux conditions suivantes sont réunies : « porte ouverte » ET « Park non engagé ». Le calculateur de la TA génère alors l'envoi sur le CAN, du message correspondant à l'alerte « porte ouverte ». Le message CAN est utilisé par le tableau de bord, ou toute autre interface homme-machine (IHM), afin de prévenir les occupants du véhicule, du risque encouru.

Si, pour des raisons d'optimisation de la consommation électrique, la transmission automatique n'est plus alimentée après la coupure du moteur, l'émission de l'état du frein de parking sur le CAN par le calculateur de la TA s'arrête également. L'alerte « porte ouverte » n'est plus générée, même si le doigt de parking n'est pas engagé. La solution proposée pour résoudre ce problème repose sur l'intervention d'un calculateur qui n'a pas été utilisé dans le calcul de valeur de l'alerte. On choisit donc un calculateur autre que le calculateur de la TA, et qui reste actif après la coupure de ce dernier. Il s'agit de préférence du calculateur du tableau de bord, qui mémorise la dernière valeur du message correspondant à l'état Park / non Park de la transmission en cas de disparition du message CAN. Toute autre unité de calcul du véhicule peut aussi être mise à contribution, si elle est associée à une interface homme-machine, le signal d'alerte étant émis de préférence par un calculateur associé aux commandes de bord du véhicule.

Comme indiqué dans la partie centrale du schéma, dès que le calculateur de la TA n'est plus opérationnel (sur des phases de vie particulières ou pour cause de défaillance), et que le message CAN correspondant à l'état de la transmission n'est plus émis par le calculateur de la TA, le calculateur du tableau de bord mémorise la dernière valeur du message correspondant à l'état Park / non Park de la transmission.

Si le calculateur du tableau de bord reçoit également l'état de la porte conducteur, il sait recalculer par lui-même, et de manière fiable et cohérente, la valeur de l'alerte « porte ouverte » qui vaut « porte ouverte » ET « non Park ».

Le tableau de bord étant alimenté de manière permanente, on peut ainsi assurer la génération de l'alerte « porte ouverte » sur toutes les phases de vie du véhicule.

L'invention est applicable en particulier pour les transmissions automatisées comportant un actionneur de doigt de parking électrique. Dans ce cas, la position mémorisée par le calculateur du tableau de bord est toujours la position définitive de la transmission automatisée, puisque le doigt de parking n'est plus alimenté : c'est la position du doigt de parking électrique, lors de la coupure de son alimentation électrique.

Si la position Park est commandée par un câble mécanique, cette position peut être engagée sans alimentation électrique. Toutefois, l'information Park / non Park de la transmission est mémorisée. Par conséquent, si le tableau de bord mémorise une position « Park non engagé » à la coupure du moteur, celle-ci peut être changée mécaniquement en « Park non engagé » par une action ultérieure du conducteur sur son sélecteur de vitesses, sans que le calculateur du tableau de bord en soit informé. Cette situation peut éventuellement générer des fausses alertes, mais ne fait pas courir le risque d'une mise en mouvement non contrôlée du véhicule, puisque la transmission est effectivement immobilisée.

## Revendications

1. Procédé d'alerte du non enclenchement d'un frein de parking associé à une transmission automatique ou automatisée de véhicule automobile, lors de la détection de l'ouverture de la portière du conducteur après la coupure du moteur, **caractérisé en ce qu'**une unité de calcul du véhicule autre que le calculateur de la transmission enregistre le dernier signal relatif à l'état d'enclenchement du frein de parking et déclenche un signal d'alerte à l'attention des passagers du véhicule si la portière du conducteur ou du passager est ouverte, et que le dispositif de parking de la transmission automatique ou automatisée n'est pas enclenché.

2. Procédé d'alerte selon la revendication 1, **caractérisé en ce que** la mémorisation du dernier signal d'état d'enclenchement est assurée par un calculateur du véhicule restant actif après la coupure du calculateur de la transmission.

3. Procédé d'alerte selon la revendication 1 ou 2, **caractérisé en ce que** le message d'alerte est émis par un calculateur associé aux commandes de bord du véhicule.

4. Procédé d'alerte selon l'une des revendications précédentes, **caractérisé en ce qu'**en cas de disparition du message CAN, le calculateur du tableau de bord mémorise la dernière valeur du message correspondant à l'état Park / non Park de la transmission.

5. Procédé d'alerte selon l'une des revendications précédentes, **caractérisé en ce que** la position mémorisée par le tableau de bord est la position d'un doigt de parking électrique, lors de la coupure de son alimentation électrique.

## Patentansprüche

1. Verfahren zum Warnen, dass eine einem Automatikgetriebe oder einem automatisierten Getriebe eines Kraftfahrzeugs zugeordnete Feststellbremse nicht eingerastet ist, bei Detektion der Öffnung der Fahrertür nach dem Abschalten des Motors, **dadurch gekennzeichnet, dass** ein Steuergerät des Fahrzeugs, bei dem es sich nicht um das Getriebesteuergerät handelt, das letzte Signal über den Einrastzustand der Feststellbremse speichert und ein Warnsignal für die Fahrzeuginsassen auslöst, wenn die Fahrertür oder die Beifahrertür geöffnet wird und die Parkvorrichtung des Automatikgetriebes oder des automatisierten Getriebes nicht eingerastet ist.

2. Warnverfahren nach Anspruch 1, **dadurch gekennzeichnet, dass** die Speicherung des letzten Signals über den Einrastzustand durch ein Steuergerät des Fahrzeugs gesichert wird, das nach Abschaltung des Getriebesteuergeräts aktiv bleibt.

3. Warnverfahren nach Anspruch 1 oder 2, **dadurch gekennzeichnet, dass** die Warnmeldung durch ein den an Bord befindlichen Betätigungseinrichtungen des Fahrzeugs zugeordnetes Steuergerät ausgegeben wird.

4. Warnverfahren nach einem der vorhergehenden Ansprüche, **dadurch gekennzeichnet, dass** das Steuergerät des Armaturenbretts in dem Fall, dass die CAN-Meldung verschwindet, den letzten Wert der Meldung, der dem Parkstellungs-/Nichtparkstellungszustand des Getriebes entspricht, speichert.

5. Warnverfahren nach einem der vorhergehenden Ansprüche, **dadurch gekennzeichnet, dass** die durch das Armaturenbrett gespeicherte Position die Position eines elektrischen Parkstellungsfingers bei Abstellung seiner Energieversorgung ist.

## Claims

1. Method for signalling that a parking brake associated with an automatic or automated motor vehicle transmission is not engaged, upon detecting the opening of the door of the driver after the engine has been switched off, **characterized in that** a vehicle computation unit other than the transmission computer records the last signal relating to the state of engagement of the parking brake and triggers an alert signal for the attention of the passengers of the vehicle if the door of the driver or of the passenger is open, and the parking device of the automatic or automated transmission is not engaged.

2. Alert method according to Claim 1, **characterized in that** the storage of the last engagement state signal is handled by a computer of the vehicle that remains active after the transmission computer has been switched off.

3. Alert method according to Claim 1 or 2, **characterized in that** the alert message is sent by a computer associated with the onboard controls of the vehicle.

4. Alert method according to one of the preceding claims, **characterized in that**, if the CAN message disappears, the computer of the dashboard stores the last value of the message corresponding to the park/non-park state of the transmission.

5. Alert method according to one of the preceding claims, **characterized in that** the position stored by the dashboard is the position of an electrical parking finger, when its electrical power supply is switched off.
